# EUROPÄISCHE PATENTSCHRIFT

(11) **EP 2 595 777 B1**
(45) Veröffentlichungstag und Bekanntmachung des Hinweises auf die Patenterteilung: **27.05.2015**
(21) Anmeldenummer: 11746162.4
(22) Anmeldetag: 15.07.2011
(51) Int. Cl.: B23K 26/10, B23K 37/02

(54) **VORRICHTUNG ZUM BEARBEITEN VON ROHREN MITTELS EINES LASERSTRAHLS**
DEVICE FOR PROCESSING PIPES BY MEANS OF A LASER BEAM
DISPOSITIF D'USINAGE DE TUBES PAR RAYON LASER

(30) Priorität: 19.07.2010 DE 102010027638
(43) Veröffentlichungstag der Anmeldung: 29.05.2013
(73) Patentinhaber: Kuhn, Alexander, 9100 Herisau (CH); Deininger, Christoph, 72768 Reutlingen (DE)
(72) Erfinder: Kuhn, Alexander, 9100 Herisau (CH); Deininger, Christoph, 72768 Reutlingen (DE)
(74) Vertreter: Reinhardt, Harry
(86) Internationale Anmeldenummer: PCT/EP2011/003531
(87) Internationale Veröffentlichungsnummer: WO 2012/019687

(56) Entgegenhaltungen:
- EP-A1- 0 983 819
- DE-T5-112007 001 639

## Beschreibung

Die Erfindung betrifft eine Vorrichtung zum Bearbeiten von Rohren oder anderen langgestreckten Materialien mittels eines von einer Laserstrahlquelle erzeugten Laserstrahls mit den Merkmalen des Obergriffs des Anspruches 1.

Wenn ein Rohr bearbeitet oder geschnitten werden soll, wird es im Allgemeinen im Futter einer Drehmaschine angebracht, von diesem festgehalten und rotiert, während z.B. ein nicht rotierendes Schneidwerkzeug lateral in das rotierende Rohr bewegt wird. Das Schneiden wird in mehreren aufeinanderfolgenden Drehungen des Rohrs bewerkstelligt, während das Einsatzwerkzeug allmählich in das rotierende Rohr eindringt. Für die Drehmaschine ist ein schweres Bett erforderlich, das an einem dauerhaften Standort fixiert ist. Zusätzlich sind für das Einsatzwerkzeug steife, dabei aber bewegliche Halterungen erforderlich.

Zur Erleichterung der Bearbeitung wie z.B. von Schneidearbeiten werden Laser eingesetzt. Das Bearbeiten umgeformter Rohre mittels Laser erfolgt bei üblichen Anlagen mittels einem feststehenden oder linear verfahrbaren Laser, unter dem das zu bearbeitenden Rohr gedreht bzw. verschoben wird. Bei langen, bereits abgewinkelten oder gebogenen Rohren oder bereits mit anderen Komponenten verbundenen Rohren ist ein Drehen des Werkstücks oft nicht möglich, bzw. mit hohem Aufwand verbunden, so dass andere Bearbeitungs- oder Schneidverfahren eingesetzt werden müssen.

Aus der dem Oberbegriff des Anspruches 1 zugrundeliegenden EP 0983819 A1 ist eine Rohrschneidevorrichtung bekannt, bei der mittig eine zentrale Öffnung vorgesehen ist, in der das zu schneidende Material oder Rohr fixiert wird. Um diese zentrale Öffnung herum wird ein Schneidkopf geführt, der drehbar und in Längsrichtung des zu schneidenden Materials bewegbar ist. Zwei verschiedene Antriebe werden hierbei über einen Prozessor miteinander koordiniert, um auch komplexe Schnitte durchzuführen. Der Schneidkopf ist dabei von der stationären Laserstrahlquelle entfernt, so dass das Laserlicht erst noch dem Schneidkopf zugeführt werden muss. Dies ist auch bei der Rotation des Schneidkopfs zu gewährleisten. Da die zentrale Öffnung an den Durchmesser der Rohre anzupassen ist, ist der Einsatzbereich von der Größe der zentralen Öffnung abhängig.

Ausgehend von diesem Stand der Technik liegt der vorliegenden Erfindung die Aufgabe zugrunde, eine Vorrichtung zum Bearbeiten von Rohren oder anderen langgestreckten Materialien mittels eines Laserstrahls zu schaffen, die eine günstige und flexible Bearbeitung verschiedenster Materialien ermöglicht.

Diese Aufgabe wird durch eine Vorrichtung mit den Merkmalen des Anspruches 1 gelöst.

Bei dieser Vorrichtung ist auch eine vorzugsweise zentrale Öffnung vorgesehen, jedoch dient diese nicht zum Festlegen des Rohres, sondern lediglich zur Aufnahme des Rohres. Zudem ist diese zentrale Öffnung in einem länglichen Rotationskörper wie z.B. einer Trommel ausgebildet, so dass sich ein Tunnel ergibt, innerhalb dem die Bearbeitung erfolgen kann. Damit liegen keine Begrenzungen hinsichtlich der Länge der durchzuführenden Arbeiten vor. Die Öffnung kann dabei so groß gestaltet werden, dass sowohl sehr kleine als auch sehr große Durchmesser bzw. Geometrien bearbeitet werden können. Da die Laserstrahlquelle bereits im länglichen Rotationskörper angeordnet ist, ist lediglich noch die Energiezufuhr und die entsprechende Ansteuerung auf geeignete Weise sicherzustellen, was vorzugsweise über Drehdurchführungen bzw. Schleifringe erfolgen kann, um die entsprechenden Energien und Steuerbefehle in den länglichen Rotationskörper einzubringen. Durch die flexible Aufnahme des zu bearbeitenden Materials werden die möglichen Geometrien und Drehbewegungen durch die Relativbewegung von Rotationskörper und Rohr bestimmt, so dass auch schnellere Bearbeitungszyklen unter Ausnutzung der Maximalleistung des Laserstrahls möglich sind.

Weitere Vorteile ergeben sich aus den Unteransprüchen und der nachfolgenden Beschreibung eines bevorzugten Ausführungsbeispiels.

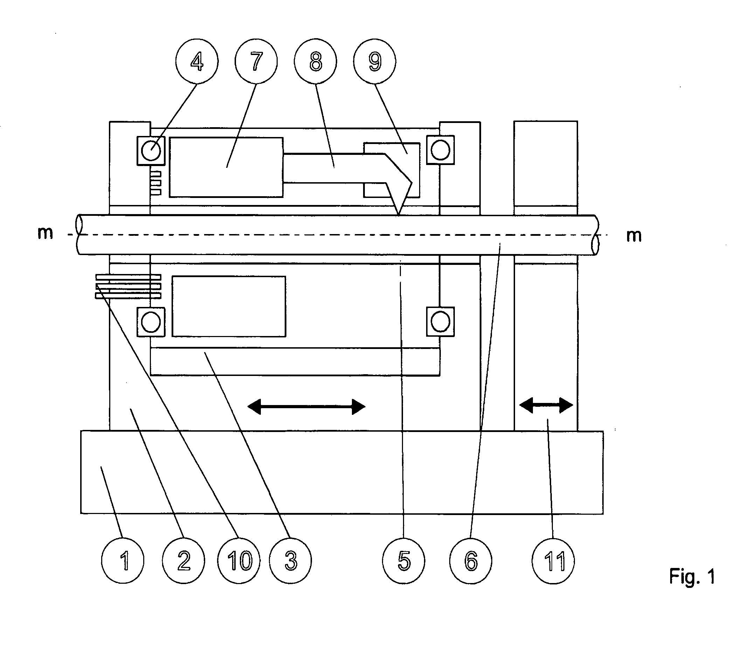

Die einzige Figur 1 zeigt eine schematische Darstellung der Vorrichtung mit einer in einer Trommel angeordneten Laserstrahlquelle im Schnitt.

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht. Figur 1 zeigt schematisch eine Vorrichtung zum Bearbeiten von Rohren oder anderen langgestreckten Materialien 6, wobei diese Rohre und Materialien unterschiedliche Querschnitte und unterschiedliche Durchmesser und Geometrien aufweisen können. Die Bearbeitung erfolgt mittels eines von einer Laserquelle 7 erzeugten Laserstrahls 8, wobei sämtliche Bearbeitungsprozesse möglich sind, die mit Laserstrahlquellen bewirkt werden können. Insbesondere werden Laserprozesse zum Schneiden, Trennen, Markieren, Reinigen, Fügen, Abtragen, Härten oder Beschriften von Materialien oder auch z.B. zum Abisolieren von Drähten vorgesehen.

Der Laserstrahl 8 kann dabei auf beliebige Art und Weise von der Laserstrahlquelle 7 zum Bearbeitungspunkt am zu bearbeitenden Material 6 gelangen. In der Figur werden dazu ein freier Laserstrahl 8 und ein Strahlführungs- und/oder Strahlformungselement 9 in Form eines Umlenkelements gezeigt. Der Strahl könnte genauso gut aber z.B. durch eine Faser oder einen Hohlwellenleiter oder dergleichen geführt sein. Unter dem Begriff "Strahlführungs- und/oder Strahlformungselement" 9 werden dabei alle den Laserstrahl führenden Elemente wie Fasern, Spiegel, Toroide, Umlenker, Strahlteiler, Scanner, usw. und/oder den Laserstrahl formende Elemente wie z.B. Linsen oder auch kombinierte Elemente wie z.B. fokussierende Spiegel, adaptive Spiegel usw. verstanden.

Auf einem Maschinenbett 1 ist ein gegenüber dem Maschinenbett verschieblich und drehbar gelagertes Halteelement zur Halterung eines Werkzeugs oder Schneidmittels vorgesehen. Dieses Halteelement wird durch einen länglichen Rotationskörper gebildet, der im Ausführungsbeispiel als eine Trommel 3 ausgebildet ist. Der längliche Rotationskörper kann jedoch eine beliebige Außengeometrie und/oder Innengeometrie aufweisen, in dem sich in Längsrichtung ein Tunnel zur Aufnahme des zu bearbeitenden Materials ausbildet. Für die weitere Erläuterung der Erfindung wird das Halteelement bzw. der längliche Rotationskörper als Trommel 3 bezeichnet.

Das Halteelement bzw. die Trommel 3 umgibt eine zentrale, insofern tunnelartige Öffnung 5, die beim Bearbeiten von dem zu bearbeitenden Material 6 durchgriffen ist. Grundsätzlich ist auch eine dezentrale Öffnung denkbar, sofern die gewünschte Bearbeitung sichergestellt ist. Deutlich ist zu erkennen, dass das Material 6 in der zentralen Öffnung 5 nicht fixiert ist, sondern frei darin aufgenommen ist. Es versteht sich von selbst, dass das Material bzw. das Rohr dazu an anderer Stelle, wie z.B. an einer Lagerung oder an einem Roboterarm, zumindest so zu halten ist, dass es bedarfsweise in Längsrichtung bewegt oder um seine Mittelachse m-m gedreht werden kann. Dabei können auch Rohre oder Materialien bearbeitet werden, die bereits mit anderen Elementen verbunden sind oder auch bereits gebogen sind. Zudem kann das Material sowohl in abgelängten Stücken als auch endlos der Vorrichtung zugeführt werden.

In der Trommel 3 ist die Laserstrahlquelle 7 innenseitig angeordnet. Dazu ist es erforderlich, die Laserstrahlquelle von außen zu kontaktieren, wofür Drehdurchführungen 10 vorgesehen sind, die sowohl die Energiezufuhr als auch die Medienzu- und - abfuhr sicherstellen und auch eine Verbindung mit einem nicht dargestellten Prozessor ermöglichen, um z.B. Steuerbefehle an die Laserstrahlquelle zu geben. Der zeichnerisch nicht dargestellte Mikroprozessor steht im Übrigen auch mit den Antriebseinheiten über die Lagerböcke 2, 11, die beide gegenüber dem Maschinenbett 1 in Längsrichtung des zu bearbeitenden Materials gemäß den Pfeilen in Fig. 1 verfahrbar sind, in Verbindung. Ebenso steuert der Mikroprozessor die zeichnerisch nicht dargestellten Drehantriebe für die Trommel 3 und/oder das zu verarbeitende Material 6.

An dem in Längsrichtung verfahrbaren Lagerbock 2 ist die um die Mittelachse m-m drehbar gelagerte, angetriebene Trommel 3 über geeignete Lager 4 gegen den Lagerbock 2 abgestützt. In der zentralen Öffnung 5 kann geeignetes Material 6 beliebigen Querschnitts wahlweise abgelängt oder auch endlos zugeführt werden. Dabei kann das Material 6 um die Mittelachse m-m rotieren oder starr geführt werden und es kann auch in Längsrichtung bewegt werden oder zum Maschinenbett 1 fixiert sein. In der Trommel 3 ist ein geeignetes Werkzeug, im Besonderen eine Laserstrahlquelle 7 so angeordnet, dass durch Drehung der Trommel 3 eine Materialbearbeitung am Umfang des Werkstücks erfolgt. Im Falle des Laserstrahls wird durch ein geeignetes Strahlführungs- und/oder Strahlformungselement 9 der Strahl zum Werkstück in einem geeigneten Winkel umgelenkt. Die Laserstrahlquelle 7 gibt also den Strahl im Wesentlichen parallel zur Mittelachse m-m ab, so dass das Strahlführungs- und/oder Strahlformungselement 9 den Laserstrahl auf das zu schneidende Material 6 in der Trommel 3 umlenkt. Grundsätzlich ist jedoch auch jede andere Anordnung der Laserstrahlquelle 7 denkbar, solange die Laserstrahlquelle 7 innerhalb der Trommel 3 angeordnet ist. So kann die Laserstrahlquelle z.B. auch radial in Richtung auf den Bearbeitungspunkt ausgerichtet sein, ohne dass es eines Strahlführungs- und/oder Strahlformungselements 9 bedarf. Das Strahlführungs- und/oder Strahlformungselement 9 und/oder auch die Laserstrahlquelle kann über einen zeichnerisch nicht dargestellten Antrieb hinsichtlich der Trommel auch radial und/oder axial verstellbar ausgebildet werden, um den Fokuspunkt des Laserstrahls auf unterschiedliche und/oder nicht rotationssymmetrische oder asymmetrische Geometrien einzustellen.

Ein weiterer Lagerbock 11, der in Längsrichtung des zu bearbeitenden Materials 6 beweglich ist, unterstützt das Materialhandling. Die Relativbewegung zwischen Material 6 und Trommel 3 wird durch den Vorschub des Materials 6 und die Bewegung des Lagerbocks 2 bestimmt. Die relative Geschwindigkeit des Werkzeugs oder der Laserstrahlquelle 7 zum Material am Umfang wird durch die Drehgeschwindigkeit von Trommel 3 und Material 6 bestimmt.

Der durch die zentrale Öffnung 5 in der Trommel 3 gebildete Tunnel erlaubt eine vielfältige Bearbeitung des zu bearbeitenden Materials 6. Einerseits können beliebige kleine oder auch große Durchmesser verwendet werden, so lange die zentrale Öffnung 5 im Durchmesser groß genug ist. Andererseits stören keine Optiken für den Laserstrahl die Bearbeitung innerhalb der zentralen Öffnung. Die Trommel 3 hat zudem den Vorteil, dass in Längsrichtung des Materials verhältnismäßig lange Schnitte oder Bearbeitungen erfolgen können, wobei bedarfsweise auch die Trommel entsprechend verlängert werden kann.

### Bezugszeichenliste

- 1: Maschinenbett
- 2: Lagerbock
- 3: Trommel
- 4: Lager
- 5: Zentrale Öffnung
- 6: Material
- 7: Laserstrahlquelle
- 8: Laserstrahl (frei oder geführt, z.B. Faser)
- 9: Strahlführungs- und/oder Strahlformungselement
- 10: Drehdurchführung
- 11: Weiterer Lagerbock
- m-m: Mittelachse von 6

## Patentansprüche

1. Vorrichtung zum Bearbeiten von Rohren oder anderen langgestreckten Materialien (6) mittels eines von einer Laserstrahlquelle (7) erzeugten Laserstrahls (8) mit
- einem Maschinenbett (1),
- einem gegenüber dem Maschinenbett (1) verschieblich und drehbar gelagerten Halteelement zur Halterung eines Werkzeugs oder Schneidmittels,
- einer vom Halteelement umschlossenen Öffnung (5), die beim Bearbeiten von dem zu bearbeitenden Material (6) durchgriffen ist,
**dadurch gekennzeichnet, dass** das drehbar und verschieblich gelagerte Halteelement ein länglicher, hohler Rotationskörper ist, an dem als Werkzeug oder Schneidmittel die Laserstrahlquelle (7) für den Laserstrahl (8) innenseitig angeordnet ist.

2. Vorrichtung nach Anspruch 1, **dadurch gekennzeichnet, dass** in dem länglichen Rotationskörper in Längsrichtung ein Tunnel zur Aufnahme des zu bearbeitenden Materials (6) vorgesehen ist.

3. Vorrichtung nach Anspruch 1 oder 2, **dadurch gekennzeichnet, dass** der längliche Rotationskörper eine Trommel (3) ist, wobei die Öffnung (5) eine zentrale Öffnung der Trommel(3) ist.

4. Vorrichtung nach einem der vorhergehenden Ansprüche, **dadurch gekennzeichnet, dass** der Laserstrahl (8) frei oder durch Fasern oder Hohlwellenleiter geführt dem zu bearbeitenden Material (6) zugeleitet wird.

5. Vorrichtung nach einem der vorhergehenden Ansprüche, **dadurch gekennzeichnet, dass** der längliche Rotationskörper an einem gegenüber dem Maschinenbett in Längsrichtung des zu bearbeitenden Materials (6) verschieblich angeordneten Lagerbock (2) um die Mittelachse (m-m) des zu bearbeitenden Materials drehbar gelagert ist.

6. Vorrichtung nach einem der vorhergehenden Ansprüche, **dadurch gekennzeichnet, dass** das Material (6) in Längsrichtung beweglich und/oder um seine Mittelachse (m-m) drehbar die Öffnung (5) durchgreift.

7. Vorrichtung nach einem der vorhergehenden Ansprüche, **dadurch gekennzeichnet, dass** die Laserstrahlquelle (7) den Laserstrahl (8) im Wesentlichen in Richtung der Mittelachse (m-m) abstrahlt und dass ein Strahlführungs- und/oder Strahlformungselement (9) zur Umlenkung des Laserstrahls (8) auf das zu bearbeitende Material (6) in der Trommel (3) vorgesehen ist.

8. Vorrichtung nach Anspruch 7, **dadurch gekennzeichnet, dass** das Strahlführungs- und/oder Strahlformungselement (9) hinsichtlich der Mittelachse der Trommel (3) radial und/oder axial verstellbar ist.

9. Vorrichtung nach Anspruch 7 oder 8, **dadurch gekennzeichnet, dass** das Strahlführungs- und/oder Strahlformungselement wenigstens eines der Elemente aus der Gruppe der adaptiven Spiegel, fokussierenden Spiegel, Toroide, Scanner, Fasern, Umlenkelemente, Strahlteiler, Linsen umfasst.

10. Vorrichtung nach einem der Ansprüche 5 bis 9, **dadurch gekennzeichnet, dass** Drehdurchführungen (10) zur Energieversorgung der Laserstrahlquelle (7) zwischen dem länglichen Rotationskörper und dem Lagerbock (2) vorgesehen sind.

11. Vorrichtung nach einem der vorhergehenden Ansprüche, **dadurch gekennzeichnet, dass** ein weiterer Lagerbock (11) in Längsrichtung des zu bearbeitenden Materials (5) am Maschinenbett verfahrbar vorgesehen ist.

## Claims

1. A device for processing pipes or other elongate materials (6) by means of a laser beam (8) generated by a laser beam source (7), comprising
- a machine bed (1),
- a holding element, mounted so as to be displaceable relative to said machine bed (1) and rotatable, for holding a tool or cutting means,
- an opening (5) surrounded by the holding element, through which opening the material (6) to be machined passes during processing,
**characterized in that** the rotatably and displaceably mounted holding element is an elongate, hollow rotational body, on which the laser beam source (7) for the laser beam (8) is arranged on the inside as the tool or the cutting means.

2. A device according to claim 1, **characterized in that** a tunnel for accommodating the material (6) to be machined is provided in the longitudinal direction in the elongate, hollow rotational body.

3. A device according to claim 1 or claim 2, **characterized in that** the elongate, hollow rotational body is a drum (3), the opening (5) being a central opening of the drum (3).

4. A device according to any one of the preceding claims, **characterized in that** the laser beam (8) is supplied freely or guided by fibers or waveguides to the material (6) to be machined.

5. A device according to any one of the preceding claims, **characterized in that** the elongate, hollow rotational body is mounted rotatably about the center axis (m-m) of the material to be machined on a bearing block (2), which is arranged displaceably relative to the machine bed in the longitudinal direction of the material (6) to be machined.

6. A device according to any one of the preceding claims, **characterized in that** the material (6) passes movably in the longitudinal direction and/or rotatably about its center axis (m-m) through the opening (5).

7. A device according to any one of the preceding claims, **characterized in that** the laser beam source (7) emits the laser beam (8) substantially in the direction of the center axis (m-m) and **in that** there is provided in the drum (3) a beam-guiding and/or beam-shaping element (9) for deflecting the laser beam (8) onto the material (6) to be machined.

8. A device according to claim 7, **characterized in that** the beam-guiding and/or beam-shaping element (9) is radially and/or axially adjustable with regard to the center axis of the drum (3).

9. A device according to claim 7 or 8, **characterized in that** the beam-guiding and/or beam-shaping element comprises at least one of the elements from the group of adaptive mirrors, focusing mirrors, toroids, scanners, fibers, deflection elements, beam splitters or lenses.

10. A device according to any one of claims 5 to 9, **characterized in that** rotary feedthrough units (10) are provided between the elongate, hollow rotational body and the bearing block (2) for supplying power to the laser beam source (7).

11. A device according to any one of the preceding claims, **characterized in that** a further bearing block (11) is provided which is displaceable on the machine bed in the longitudinal direction of the material (5) to be machined.

## Revendications

1. Dispositif d'usinage de tubes ou d'autres matériaux allongés (6) au moyen d'un rayonnement laser (8) produit par une source de rayonnement laser (7), comportant :
- un banc de machine (1),
- un élément de support monté déplaçable et tournant par rapport au banc de machine (1) pour le support d'un outil ou d'un moyen de coupe,
- une ouverture (5) entourée par l'élément de support, qui est traversée par le matériau à usiner (6) lors de l'usinage,
**caractérisé en ce que** l'élément de support monté tournant et déplaçable est un corps tournant oblong et creux, dans lequel est disposée à l'intérieur, en tant qu'outil ou moyen de coupe, la source de rayonnement laser (7) pour le rayonnement laser (8).

2. Dispositif selon la revendication 1, **caractérisé en ce qu'**un tunnel est prévu dans le corps tournant oblong dans le sens longitudinal pour la réception du matériau à usiner (6).

3. Dispositif selon la revendication 1 ou 2, **caractérisé en ce que** le corps tournant oblong est un tambour (3), l'ouverture (5) étant une ouverture centrale du tambour (3).

4. Dispositif selon l'une des revendications précédentes, **caractérisé en ce que** le rayonnement laser (8) est transmis librement ou guidé par des fibres ou un guide d'ondes creux au matériau à usiner (6).

5. Dispositif selon l'une des revendications précédentes, **caractérisé en ce que** le corps tournant oblong est monté tournant autour de l'axe central (m-m) du matériau à usiner sur un support de pallier (2) disposé déplaçable par rapport au banc de machine dans le sens longitudinal du matériau à usiner (6).

6. Dispositif selon l'une des revendications précédentes, **caractérisé en ce que** le matériau (6) traverse l'ouverture (5) de manière déplaçable dans le sens longitudinal et/ou tournante autour de son axe central (m-m).

7. Dispositif selon l'une des revendications précédentes, **caractérisé en ce que** la source de rayonnement laser (7) émet le rayonnement laser (8) essentiellement en direction de l'axe central (m-m) et **en ce qu'**un élément de guidage de rayonnement et/ou de façonnage de rayonnement (9) est prévu dans le tambour (3) pour dévier le rayonnement laser (8) sur le matériau à usiner (6).

8. Dispositif selon la revendication 7, **caractérisé en ce que** l'élément de guidage de rayonnement et/ou de façonnage de rayonnement (9) est réglable radialement et/ou axialement par rapport à l'axe central du tambour (3).

9. Dispositif selon la revendication 7 ou 8, **caractérisé en ce que** l'élément de guidage de rayonnement et/ou de façonnage de rayonnement comprend au moins l'un des éléments choisis dans le groupe constitué par un miroir adaptable, un miroir focalisant, un réflecteur toroïdal, un scanner, des fibres, des éléments de déviation, des séparateurs de faisceau et des lentilles.

10. Dispositif selon l'une des revendications 5 à 9, **caractérisé en ce que** des passages circulaires (10) sont prévus pour l'alimentation en énergie de la source de rayonnement laser (7) entre le corps tournant oblong et le support de palier (2).

11. Dispositif selon l'une des revendications précédentes, **caractérisé en ce qu'**un support de pallier (11) supplémentaire est prévu mobile dans le sens longitudinal du matériau à usiner (6) sur le banc de machine.
